# EUROPEAN PATENT SPECIFICATION

(11) **EP 4 158 239 B1**
(45) Date of publication and mention of the grant of the patent: **13.05.2026**
(21) Application number: 21730155.5
(22) Date of filing: 27.05.2021
(51) Int. Cl.: F17C 13/00

(54) **VACUUM PANEL**
VAKUUMPANEEL
PANNEAU À VIDE

(30) Priority: 02.06.2020 GB 202008266
(43) Date of publication of application: 05.04.2023
(73) Proprietor: Cryovac AS, 3014 Drammen (NO)
(72) Inventor: FOSS, Stein, Drammen (NO); ØIEN, Sverre, Drammen (NO); ANDERSEN, Aage Bjorn, Drammen (NO); PAULSEN, Terje, Drammen (NO)
(74) Representative: D Young & Co LLP
(86) International application number: PCT/EP2021/064254
(87) International publication number: WO 2021/244948

(56) References cited:
- WO-A1-2019/054692
- WO-A1-2019/155157
- CN-B- 108 193 828
- FR-A1- 2 221 687
- US-A- 3 990 202
- US-A- 4 282 280
- US-A1- 2014 166 675
- US-B1- 6 178 754

## Description

### Background

The present invention relates to an insulation arrangement for insulating low temperature containment tanks. The invention is particularly, but not exclusively, applicable to the storage and transportation (and consumption in the case of fuel) of cryogenic liquids such as liquefied hydrogen and liquefied natural gas (LNG), either as cargo or as fuel.

Transporting such liquefied gases allows for large volumes of gas to be transported in a single journey which reduces pollution and increases transport efficiencies. In order to transport such liquified gases, an extremely low temperature must be maintained during the journey of the ship.

Maintaining the gases in liquid condition at these low temperatures is achieved by applying thermal insulation of the tanks used to contain the liquefied gases. This is generally in the form of one or more layers of an insulating material such as polyurethane foam which may be sprayed onto the tank surface or mounted in the form of prefabricated panels often including the use of plywood and which prevents the surrounding heat from reaching the cargo tanks and heating the liquefied gas.

Such systems have been successfully used in a variety of gas carrying ships which have been able to safely transport liquefied gases around the world.

However, the inventors have devised a new arrangement that allows liquefied gases at extremely low temperatures to be contained and insulated from the surrounding conditions more efficiently than existing methods. More specifically, an invention described herein allows for the insulation of cargo tanks or fuel tanks at temperatures close to absolute zero i.e. lower than -250 degrees C.

Advantageously such a system allows gases such as hydrogen or methane to be contained and maintained in a liquid state. Combustion of hydrogen only creates water as a waste product and so the ability to contain and use such a fuel provides significant environmental and efficiency advantages. It also allows ship and fleet operators to comply with ever more stringent environmental regulations that may apply to the shipping industry in the future.

Other advantages are described herein.

US 3990202A relates to an 'Insulating wall unit'.

### Summary of the invention:

The scope of protection relates to a modular insulation arrangement in accordance with independent claim 1. Advantageous embodiments can be found in the rest of the claims.

Viewed from a first aspect a modular insulation can be arranged comprising one or more tessellating insulation units, each unit comprising a first inwardly facing layer and a second outwardly facing layer spaced from the first layer, the two layers defining a space therebetween and one or more spacing members extending between the first and second layers, and wherein the surfaces defining the first layer, the second layer and the outer perimeter extending around the arrangement are air impermeable surfaces.

Thus, according to the disclosure a modular insulation system or arrangement is provided which allows a range of tank geometries to be insulated. The space between the layers may be evacuated of air to create a full or near full vacuum which provides enhanced insulation properties and prevents heat from the outside ambient environment being communicated to the tank and thus to the contents of the tank.

The invention relates to insulation in conjunction with the containment and/ or carriage of liquefied gas such as LNG, Hydrogen and any other relevant gases. Gases are liquefied typically by reducing temperatures to extreme levels. Such conditions require insulation to avoid vaporisation. Furthermore, reflecting on consequences including those related to safety following potential leakage of liquefied gas from tanks, a barrier may be required to safeguard its immediate environment. Depending upon requirements by operations and/ or by regulation, insulation systems may be designed to provide both as a temperature control device as well as a barrier, a second barrier assuming the tank itself represents a first barrier. This invention may be used in applications where it will fulfil one or both requirements.

The invention may be applied for insulating cryogenic tanks to minimise thermal leakage and vaporisation. Such tanks may be tanks for the storage or transportation of gas as cargo as well as for fuel. The innovation may be used for different tank types, e.g. IMO type A tank, IMO type B tank, IMO type C tank, prismatic tanks, tanks arranged in a vessels structure integrated or stand-alone, tanks arranged in a stand-alone skid structure such as an ISO container or arranged in any other way. It may be applied onto the tank, in immediately vicinity of the tank or it may be applied to insulate a room or hold in which the tank is situated. Furthermore, the invention may be arranged so that it will fulfil the purpose of insulation and in addition provide as secondary barrier by securing containment and sufficiently low temperatures, securing the surroundings from leakage and/or consequences of leakage from a damaged cryogenic tank.

The space between the first and second layers and the surface defining the outer perimeter of the arrangement defines an internal volume to the arrangement. The spacing members may be conveniently arranged within this space and between the two surfaces or layers and used to resist atmospheric pressure acting on the surfaces when the internal volume is evacuated of air. It will be recognised that when the vacuum is drawn atmospheric pressure will act to push the two outer surfaces together. Including an internal support or spacing structure resists this movement and also provides structural strength to the panel to resist, for example, the pressure caused by a rupture of the tank to which the insulation is applied.

A valve may also be provided in fluid communication with the internal volume, the valve arranged in use to allow air to be evacuated from the internal volume. Thus, the internal pressure within the insulation panel or a structure comprising a multitude of panels can be controlled.

The first and second layers are importantly impermeable to air so as to maintain the vacuum. Additionally, the perimeter surrounding the individual panel or a structure comprising a multitude of panels must also be impermeable to air. In order to prevent heat being transmitted from the ambient side of the arrangement to the tank side of the arrangement a thermal break or barrier is conveniently provided between the tank facing surface and the ambient facing surface.

In one arrangement the gas impermeable surface defining the outer perimeter of the arrangement is formed of a first portion coupled to the first layer and a second portion coupled to the second layer and further comprising a third portion coupled to the first and second portions. Thus, the perimeter surface is formed of three portions wherein the third portion may function as the thermal break or barrier.

Specifically, the third portion may be formed of a material, or provided with a geometry relative to the first and second portions, which has a lower thermal conductivity coefficient than the first and or second portions. Thus, the third portion acts to prevent heat transmission through the perimeter portion of the arrangement.

The spacing elements within the panel provide a number of functions including:
- maintaining the separation of the layers of the arrangement to maintain the internal volume of the arrangement;
- providing structural strength to the arrangement to allow it to be secured to a surface such as a tank surface or hull surface; and
- providing structural strength should the tank be compromised through leakage or rupture thereby creating a hydraulic load from the liquid within the tank.

The spacing members may be provided in a number of configurations to maintain the spacing and provide the required strength. For example, the spacing member(s) may be in the form of a plurality of columns extending between the first and second layers.

In order to allow air to be evacuated from the internal space of the arrangement, including the spacing elements, the or each column may comprise an aperture allowing air to enter and leave the volume within the column.

In order to prevent heat passing through the arrangement along the spacing elements, the spacing member(s) may be formed all or in part from a material selected from wood (plywood or other suitable wood or wood composites), bamboo, cardboard or stainless-steel. Other suitable materials include PEEK, Polyurethane and PTFE. Thus, a low thermal conductivity material can be provided to supress or prevent heat transfer between the tank and ambient surfaces of the arrangement. Alternatively, an ultra-thin metal can also be used which may have a higher thermal conductivity but may sufficiently limit thermal transfer.

In another arrangement to prevent heat transfer the spacing member(s) may be formed of a first portion extending from the first surface and a second portion extending from the second surface and an intermediate portion connecting the first portion to the second portion of the spacing member. The intermediate portion may have a lower thermal conductivity coefficient than the first and or second portions. Thus, a heat break or insulator may be provided.

The materials may be selected to prevent heat transfer along the spacing element. For example, the first portion and second portion of the spacing element may be formed of aluminium or an alloy thereof and wherein the intermediate portion may be formed from a material selected from the list of aluminium, aluminium alloy, stainless-steel, rubber, POM, PTFE, PEEK or other suitable material.

In order to conveniently and securely create a tessellated arrangement the perimeter of the or each tessellating units may comprise a connection surface for abutment with an adjacent tessellating unit. The connection surface provides a continuous contact between adjacent units along the surface when adjacent units are brought together.

For example, the connection unit may be in the form of a radially extending rim extending from the perimeter of the unit. The rim may extend only radially outwards or may be tapered or angled with respect to a perpendicular line extending from the tank surface. Providing the rim at an angle may advantageously allow for some flexibility in the joint between adjacent tessellating panels by virtue of the flexibility provided by the angle at which the rim extends. Thus, thermal and loading forces can be accommodated within the tessellating structure which may be important as the tank is loaded and unloaded creating thermal expansion and contraction of the arrangement.

A rim may be provided on both the tank facing side of the arrangement and also the ambient facing side of the arrangement.

The individual insulations units or panels may have a variety of shapes including, for example, triangles, squares, rectangles, hexagons or other tessellating polygons.

Advantageously the units may be hexagonal and the one or more spacing elements additionally hexagonal in cross-section. A hexagonal shape allows for more uniform thermal expansion in a radial direction as the unit is heated and cooled. This allows for better control of thermally induced loads within the arrangement.

The spacing elements may be in the form of a plurality of elements within the internal space of the unit. They may be dispersed or spread across the surface or in abutment with each other. If in abutment it may not be necessary to connect the individual elements together since the space defined by the layers and perimeter may secure them in position. In another arrangement the elements may be formed as a single unit such as a matrix of hexagonal columns. Such an arrangement may be conveniently extruded making for simple and cost-effective manufacture.

When tessellated together multiple modular insulating arrangements may be in gaseous communication with one another such that evacuation of one arrangement causes air to be drawn from other arrangements. Thus, a plurality of arrangements can be evacuated with a single pump.

The units may be connected together in a variety of ways. In one example to provide an air impervious seal, adjacent modular insulation arrangements may be welded together along a perimeter of each arrangement.

The performance of the arrangement may be monitored in a number of ways. For example, the insulation system may further comprise a pressure detector arranged in use to monitor the pressure within the or each arrangement and further comprising a control arrangement arranged to activate an air pump in response to the detected pressure. Alternatively, or additionally, a temperature sensor (a probe, thermocouple of thermal camera) may be arranged in use to monitor the temperature within the or each arrangement and further comprising a control arrangement arranged to activate an air pump in response to the detected temperature and/ or to the detected change in pressure.

Thus, the performance of the arrangement can be monitored and controlled in real time addressing any loss in thermal performance quickly and thus avoiding any increases in tank temperature.

Viewed from another aspect of the disclosure there is provided a cryogenic containment tank comprising a modular arrangement as described herein, the method comprising the step of evacuating the space within one or more modular arrangements. This may be performed intermittently, and further evacuation carried out to maintain the vacuum.

Viewed from a still further aspect there is provided a liquefied gas transport arrangement comprising a tank for containing a liquefied gas and an insulation layer surrounding the outer surface of the tank or the surface of a room in which the tank is located, wherein the insulation layer is in the form of a first inwardly facing layer facing the tank and a second outwardly facing layer facing away from the tank, the first and second layer being spaced from one another and defining a space between the first and second layers, and wherein the surfaces defining the first layer and the second layer are air impermeable surfaces.

The insulation layer surrounding the tank or insulating the room / hold-space in which the uninsulated tank is to be installed may be divided into separate insulating sections and the separate insulating sections may be arranged in use to abut one another to envelope the tank or to cover the surface of the room.

Advantageously the arrangement may be contained within a support structure and wherein the support structure is arranged in use to be coupled to adjacent and corresponding support structures to form an array of individual liquefied transport arrangements.

### Drawings

Aspects of the invention will now be described, by way of example only, with reference to the accompanying figures in which:
Figures 1A and 1B show a cross-section through a conventional liquefied gas carrying ship, Figure 1B is an expanded view of a corner section of the ship's tank;
Figures 2A and 2B show an insulation arrangement as described herein;
Figure 3 shows a view of a single panel with one outer surface removed to reveal the inner components;
Figure 4A shows an upper surface of the panel for connection to the arrangement shown in figure 3;
Figure 4B shows an opposing (lower) surface of the panel;
Figures 5A and 5B show a perimeter section of the panel;
Figure 6 shows a cross-section through a thermal isolator;
Figure 7 shows a cross-section through a perimeter section of a panel;
Figures 8A to 8D show a hexagonal panel arrangement;
Figure 9 shows a hexagonal panel and a plurality of spacing elements;
Figure 9A shows an exploded view of the components forming the panel in figure 9;
Figure 10 shows the outer surfaces of the hexagonal panel arrangement;
Figure 11 shows a hexagonal perimeter which, when coupled to the surfaces shown in figures 10 defines the volume of the panel which can be evacuated;
Figure 12A shows a perimeter of a panel and rim arrangement;
Figure 12B shows a cross-section through the perimeter thermal isolation arrangement;
Figure 12C shows the abutment of adjacent panels;
Figures 13 and 14 show a plurality of hexagonal panels coupled to form a single unit or bank of panels;
Figure 15A shows one arrangement of hexagonal panels attached to a tank;
Figure 15B shows one arrangement of hexagonal panels attached to the inner hull in a room / hold space (cargo area) of a ship;
Figure 16 shows an example vacuum coupling to a panel;
Figure 17 shows a transport system for liquefied gas incorporating an insulation system described herein;
Figure 18 shows a matrix of the transport system shown in figure 17;
Figure 19A, 19B and 19C show plan, side and end elevations of an exploded system as shown in figure 17;
Figure 20 illustrates example dimensions of the system;
Figure 21 shows a cross-section of a ship implementation of an insulation system described herein;
Figure 22 shows a cross-section through the various layers forming such a system; and
Figure 23 shows a cross-section through one of the tank support feet.

While the invention is susceptible to various modifications and alternative forms, specific embodiments are shown by way of example in the drawings and are herein described in detail.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples. It will also be recognised that the invention covers not only individual embodiments but also combination of the embodiments described herein.

The various embodiments described herein are presented only to assist in understanding and teaching the claimed features. These embodiments are provided as a representative sample of embodiments only and are not exhaustive and/or exclusive.

### Detailed Description

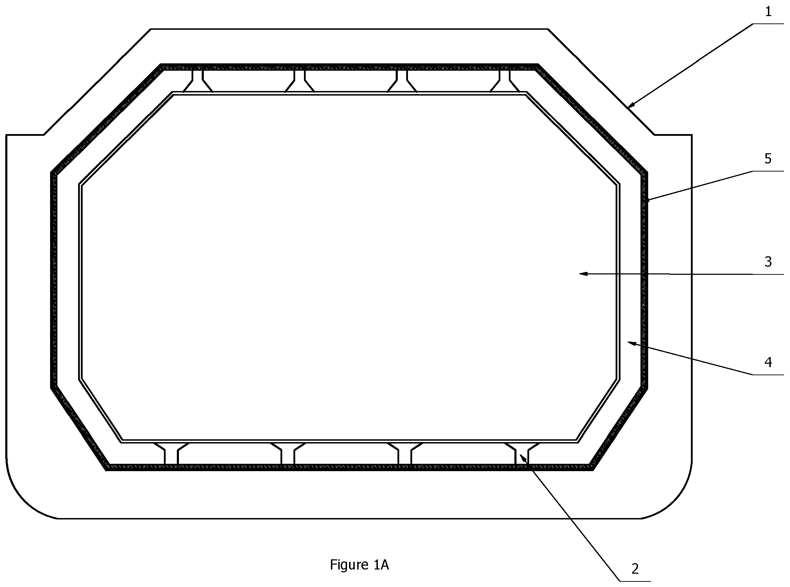

Figure 1A shows a cross-section through a conventional gas carrying ship 1, adapted for the transfer of a liquefied gas cargo. Gas is liquefied and pumped into tanks within the ship for long distance transport. In order to maintain the gas in a liquefied state the tanks of the ship must be maintained at a very low temperature which requires specific insulation of the cargo tanks.

The ship comprises a cargo support system 2 which provides support for the cargo tank 3 against and within the hull of the ship. The tank 3 acts as the primary containment barrier of the ship and is typically formed of steel or aluminium designated for low temperature applications.

An inter-barrier space 4 is provided which defines a space between the tank 3 and a further secondary barrier. This may be the inner hull of the ship and may be another layer of insulation material or an insulation arrangement of the ship. In such a case, the inter-barrier space provides an accessible space between the outer surface of the tank 3 and insulation that is arranged on the surface of the inner hull.

Alternatively, the insulation arrangement may be constructed adjacent to or attached to the tank and perform as a barrier itself. In such case, the inter-barrier space will be defined by the distance from the outer surface of the tank 3 and the insulation arrangement also performing as a barrier.

The tank 3 is arranged to contain the cargo of the ship which may be a variety of liquefied gases. In one example the cargo may be liquefied natural gas (LNG) maintained at a temperature of -163 degrees C. Another example may be liquefied hydrogen maintained at a temperature of -253 degrees C.

To comply with legal requirements for the transportation of liquefied gas, a secondary protection layer 5 is provided. This may be arranged on the surface of the inner hull or by alternative means. In the event that the primary tank 3 should fail or leak the liquefied gas can flow into a space, e.g. the inter-barrier space 4 and be contained by the secondary protection layer 5. This layer prevents the liquefied gas from contacting the hull which could cause fatal failure of the hull owing to the extremely low temperature of the liquefied gas.

The arrangement shown in figure 1A is a commonplace structure of ships that are used to transport liquefied gases such as LNG. These gas carrying ships provide a secure primary tank to contain the cold liquid and a secondary back-up layer system should the primary tank leak or fail.

A disadvantage of this construction of LNG carrying ships is the time it takes for construction and consequently costs, and challenges associated with the logistics of the construction process. As described herein the construction of such vessels can be slow because the tank cannot be installed until the structure of the vessel and the secondary barrier have first been installed on the hull surface.

An advantage of the present invention is the way in which components of the ship can be installed in parallel thus reducing the overall construction time of a liquefied gas carrying vessel.

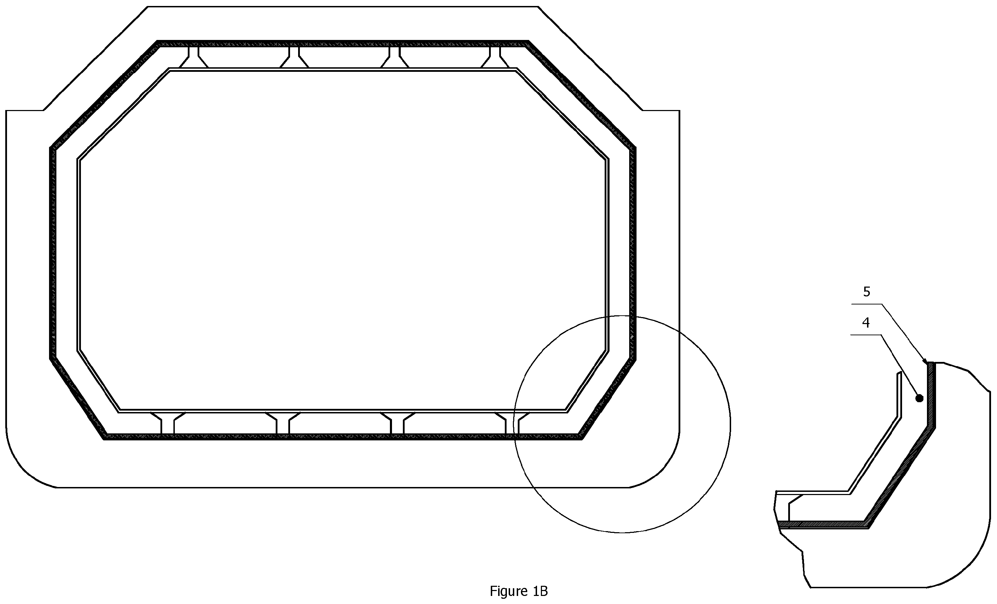

Figure 1B shows a closer view of the corner of a conventional arrangement as shown in Figure 1A. Here the inter-barrier space 4 and secondary insulation layer 5 are more clearly visible.

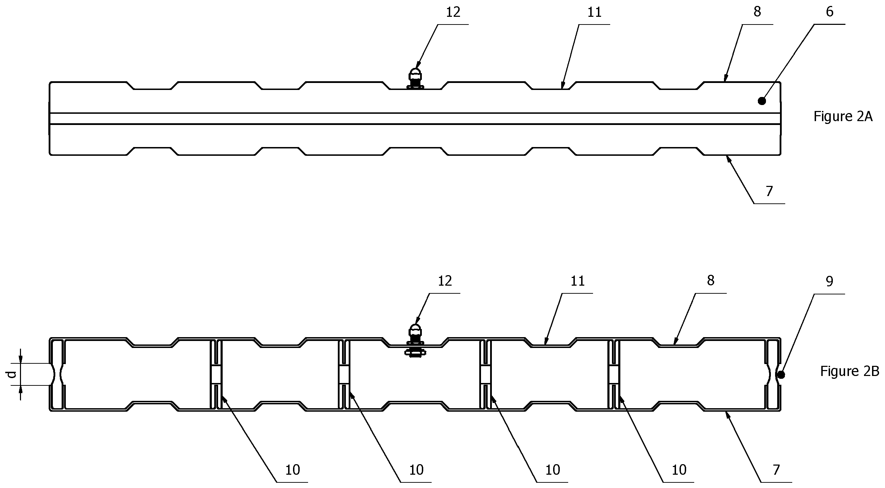

Figures 2A and 2B show a side view and cross-section (respectively) through one embodiment of an insulation arrangement described herein.

Figure 2A show the general arrangement of the insulation arrangement. The arrangement 6 comprises a first inwardly facing layer 7 and a second outwardly layer 8. The inwardly facing layer is arranged in use to face or abut with the tank containing the liquefied gas (for example the primary containment tank 3 shown in figure 1) i.e. the term 'inwardly' refers to the side of the arrangement that, in use, faces inwards towards the cold cargo.

The opposing surface 8 is arranged in use to face outwards towards the inter-barrier space 4 or the hull of the vessel (see figures 1A and 1B) i.e. outwardly from the cold cargo.

Figure 2B shows the arrangement in cross-section. As shown the first layer 7 and second layer 8 are spaced apart by distance d defining the cavity or space 9. Discrete elements 10 are located between the two layers or surfaces 7, 8 and maintain the space between the two layers.

Figures 2A and 2B also illustrate the corrugations 11 that are formed in one or both surfaces and which increases the structural strength by increasing the rigidity of the layers and additionally and advantageously accommodates thermal expansion and contraction of the surfaces of the panel.

Figures 2A and 2B also show a vacuum valve 12 which allows for air communication between the space within the arrangement and the outside ambient conditions. The valve 12 is arranged to receive an air pump (vacuum pump) that is operable to reduce the pressure within the space between the layers to, or close to, a vacuum. This is discussed further below.

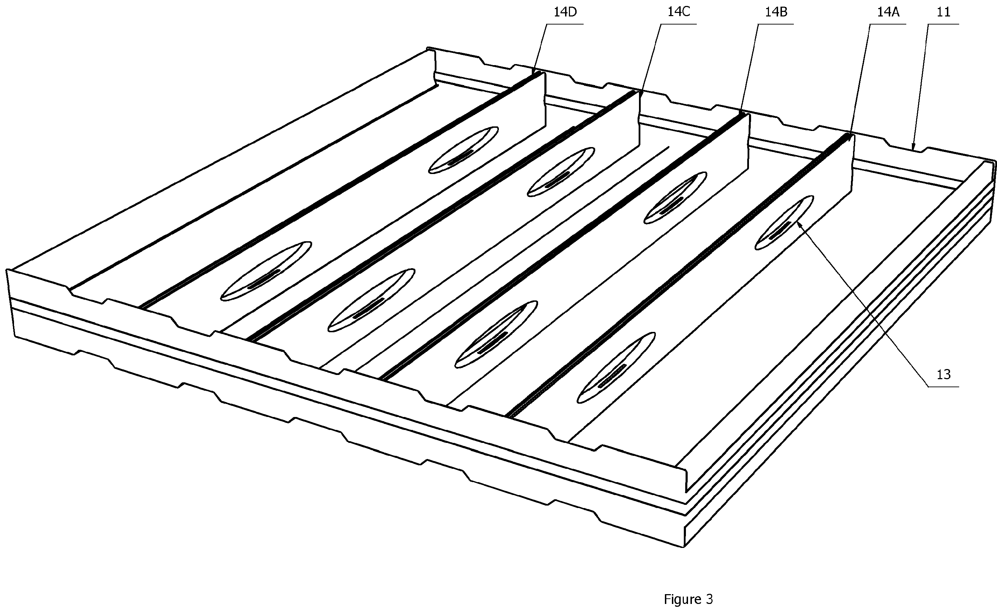

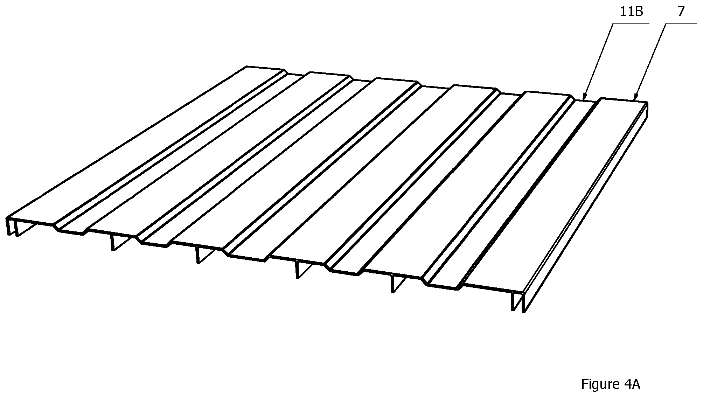

Figure 3 shows another view of a unit shown in figures 2A and 2B. Here the internal arrangement of the unit or panel is shown. As shown a series of corrugations 11 are arranged across and along the length of the panel. With reference to figure 4A a corresponding profile 11B is shown which fits within the corrugation profile 11 when the two parts are brought together. Hence the corrugations can increase the rigidity of the panel.

Returning to figure 3, in one embodiment the discrete elements spacing the surfaces 7, 8 are in the form of a plurality of elongate members 14A, 14B, 14C and 14D. It will be recognised that any number of elements may be used. The discrete elements extend from one end of the panel to the other providing support for the two surfaces along their entire length.

In order to allow for the movement of air within the panel and between the two opposing layers, each discrete spacing element (14A - 14D) is provided with a plurality of apertures 13 which allow air to move freely within the panel. Thus, as air is drawn through the valve 12 the entire space within the panel can be evacuated of air and a vacuum can be created.

Advantageously by creating a vacuum in the panel as opposed to using an insulating material, such as a foam or the like, the insulating properties of the panel can be significantly improved. Additionally, the weight of the panel can also be significantly decreased since the space between the layers of the panel is both void of material and is evacuated of air.

The two faces or layers 7, 8 are then structurally supported from each other by a plurality of discrete support elements, one example being shown in figure 3. Layers and supporting elements may be manufactured in aluminium by extrusion as one example. Thus, the panel is able to support or resist the force caused by the atmospheric pressure which acts on the two surfaces 7, 8 and the perimeter 15 when air is drawn from the panel and vacuum is established. The panel is furthermore able to support any external load applied to the panel which may be caused, for example, by a leak or rupture of the tank causing the weight of the liquid to act on the panel.

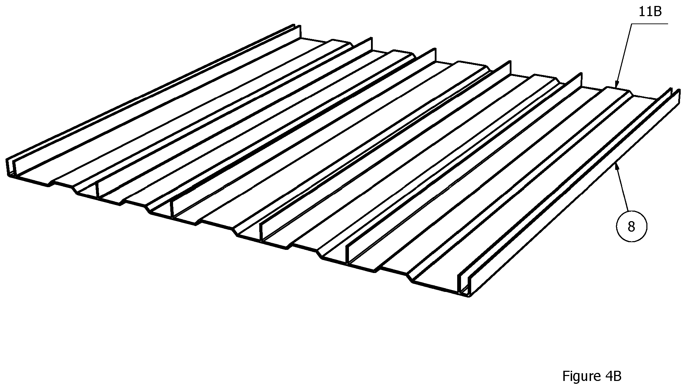

Figures 4A and 4B show one example of the construction of the panel using extruded layers 7, 8 to form the two opposing layers of the panel. Extruding each layer from, in one embodiment, aluminium advantageously allows the layers to be formed of any convenient length and width. It allows a cost effective and simple way to form each layer and, furthermore, allows the corrugations 11 to be quickly and easily formed.

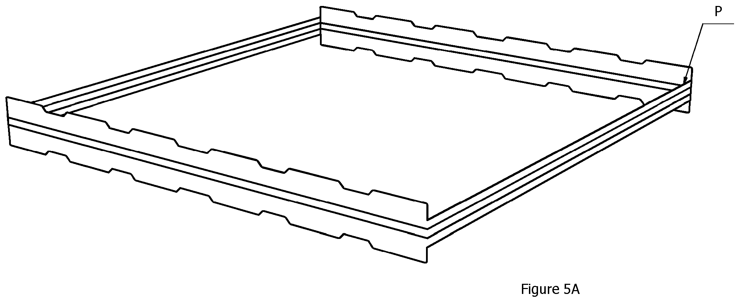

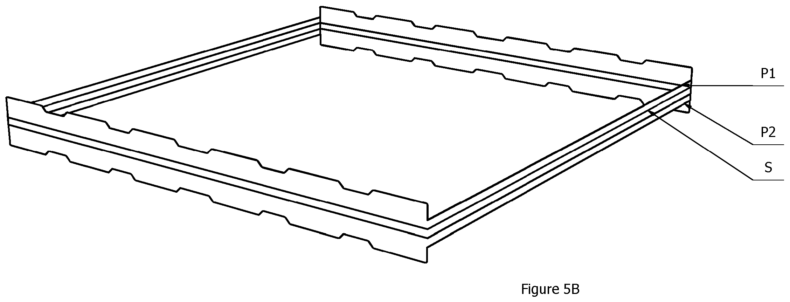

The perimeter of each panel will now be described with reference to figures 5A and 5B.

As shown in figure 5A the perimeter P extends around the 4 sides of the panel and provides an impermeable seal once connected to the edges of each of the two opposing layers shown in figures 4A and 4B. The end portions have profiles that are complementary to the corrugations 11. The panel is formed by welding the perimeter P to the two layers thereby creating a sealed internal space bound by the perimeter around the edges and the two opposing faces.

As one example perimeter of each panel will now be described with reference to figures 5A and 5B. The perimeter forms the side boundaries of the panel. Once the inwardly facing surface and outwardly facing surfaces are coupled to the perimeter (for example by means of welding) a sealed volume is thereby formed. Air can be evacuated from the volume and a vacuum is generated inside the arrangement.

Figure 5B illustrates the perimeter as 2 adjacent but unconnected components P1 and P2 with a space S between the two perimeter components. The space can be bridged (as described below) with a dissimilar material that has lower heat transfer properties than the material used for P1 and/or P2. Thus, a thermal isolator can be formed.

The perimeter may advantageously be a metal which may be conveniently welded to the two layers to provide the impervious surface around the perimeter of the panel.

Because the inwardly facing panel will be proximate the cold primary tank, the temperature of the inwardly facing surface will be substantially lower than the temperature of the outwardly facing layer which may, for example, be at ambient temperature or at approximately seawater temperature.

In one embodiment of an apparatus for containing liquefied hydrogen, the inwardly facing surface may be at a temperature < -250 degrees C whilst the outwardly facing surface may be at a temperature of > 0 degrees. Thus, there is a significant temperature differential or gradient across the panel.

Any suitable material may be used to form the layers of the panel and the discreet support elements. For example, aluminium may be used which has low density and can be used with corrugations to create a strong structure. However, the thermal conductivity of aluminium is approximately 121 W/mK and this disadvantageously allows the ambient temperature to be conducted through the material and to the cold side of the panel (and to the liquefied gas containing tank).

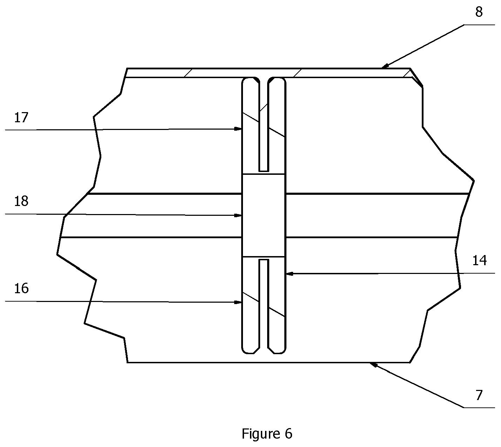

A thermal isolator may therefore be used to prevent heat transfer between the two surfaces. This is illustrated, in one example, in figure 6.

Figure 6 shows the first and second layers 7, 8 and a single discrete support element 14 extending therebetween. The support element 14 is formed of a first portion 16 extending from the first layer and a second portion 17 extending from the second layer. The two portions may be coupled together through a thermal break or isolator 18.

The thermal isolator 18 may be a dissimilar material to the two portions 16, 17. For example the layers 7, 8 and portions 16, 17 may be formed of aluminium. In one example the portions 16, 17 may be formed so as to be integral with the layers 7, 8 for example by means of extrusion. Alternatively, they may be welded at the intersection of the portions with a respective layer.

In the example shown in figure 6 the thermal isolator 18 may be a portion of stainless-steel which has a much lower thermal conductivity than the adjacent aluminium (for example approximately 12 W/mK as opposed to 121 W/mK). Thus, heat is restricted from passing directly along the discrete element and instead is prevented from passing through the thermal isolator.

In an arrangement where stainless-steel is used for the isolator and aluminium is used for the two portions 17, 18, the connection may be by means of known welding techniques for connecting stainless steel to aluminium. Other suitable bonding-processes may be applied.

The thermal isolator may alternatively be of a polymer such as rubber, POM, PTFE or PEEK suitable for cryogenic applications. Connection may be made by adhesive bonding or vulcanisation bonding.

The thermal isolator 18 may also be required around the perimeter of the panel as illustrated in figure 5A and 5B. A similar arrangement may be used as shown in figure 6. Importantly the perimeter also experiences a lateral force owing to the atmospheric pressure acting on the perimeter as the internal air within the panel is evacuated. The thermal isolator is therefore required to resist sideways or lateral movement.

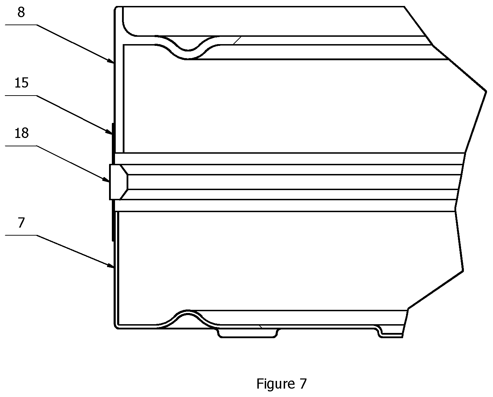

Figure 7 illustrates one example of how the perimeter 15 may be adapted to incorporate the thermal isolator. Here the isolator 18 is triangular in cross-section meaning that the atmospheric pressure acts to bias the isolator into the gap between the first and second portions of the perimeter section 15. The isolator may alternatively be a welded plate or of other geometry.

The thermal isolator may be located at any distance from the upper or lower layers 7, 8.

In yet another example the discrete support elements may be formed of a wood such as plywood, bamboo, cardboard or other material preferably with low thermal transfer properties.

Figure 7 also illustrates the perimeter of the layers which may be used to conveniently allow two adjacent panels to be welded together. In such an arrangement a single internal volume or space may be created by sealing, through an impermeable welded joint, one or more adjacent panels together. The weld could, for example, be applied to the upper and lower edges of the panel when two adjacent panels abut one another.

As described above, the individual panels may be rectangular or square in shape allowing adjacent shaped to be conveniently tessellated and joined together (for example by welding). Other shapes may also be used including triangles. A combination of different shapes may be used according to the geometry of the tank or room / hold-space which is to be insulated.

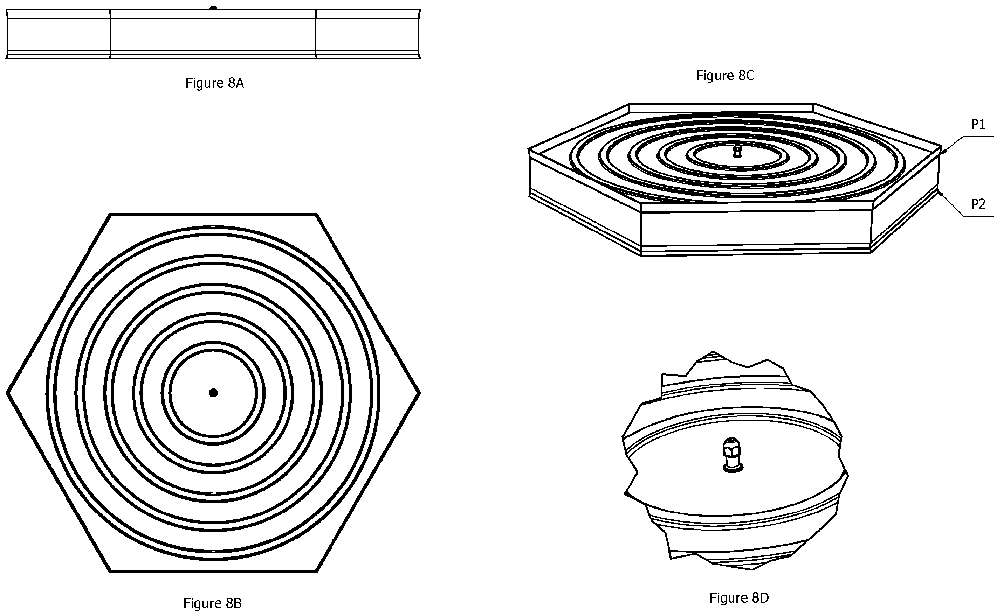

Figures 8A to 8C illustrate an alternative tessellating panel in the form of a hexagonal shape. Advantageously the hexagon can tessellate, and thermal expansion is uniform when measured radially outwards from the centre of the hexagon. Figure 8D illustrates the evacuation valve allowing air to be drawn out to create a vacuum inside the hexagonal panel.

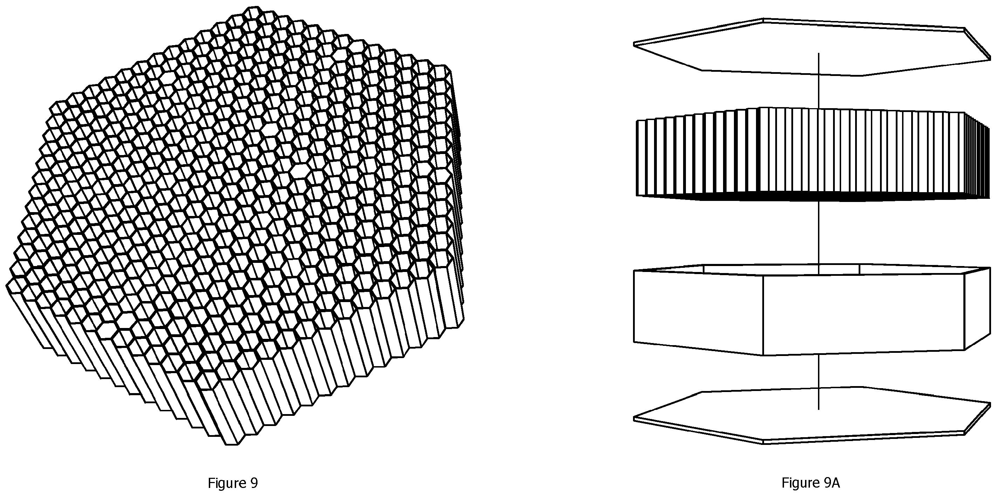

The interior of the hexagonal panel will now be described with reference to figure 9.

The hexagonal panel may comprise a plurality of discrete support elements 14 arranged in a range of different distributions and configurations. In the example shown in figure 9, instead of elongate strips of material extending along the panel or concentric rings radially spaced across the panel, the support elements are in the form of a plurality of columns.

The columns may, for example, be cylindrical or hexagonal columns extending from the inwardly and outwardly facing surfaces as shown in figure 9. The columns may rest directly on the inwards and/ or outwards panel or on a material-support layer applied on the inside of the respective layers. This material-support layer may, advantageously, have low thermal transfer characteristics. The columns can then provide the support needed to maintain the separation of the two surfaces or layers as the vacuum is drawn in the panel. Low thermal conductivity means that heat is also not transferred across the panel.

As shown in figure 9 the columns may also be in the form of hexagonal shapes which advantageously allows the individual columns to tessellate within the body of the hexagonal panel and to extend across the area of the panel. Thus, vertical and lateral loads can be accommodated.

Each column may be configured as described with reference to figure 6 with an intermediate thermal isolator. However, advantageously a single continuous material such as wood (for example plywood or wood composites), bamboo, cardboard or stainless-steel can also be used having low thermal conductivity. Thus, a thermal isolator may be used which increases simplicity and reduces manufacturing costs.

Figure 9A illustrates the sub-components which make up the hexagonal panel shown in figure 9. As illustrated a hexagonal array of individual hexagonal columns is located between in upper and lower surfaces and within the outer perimeter of the panel.

In an alternative optional arrangement, the columns may themselves also be filled with an insulating material, such as an expanded foam, perlite or the like. The columns may each be all or partially filled with such material which may advantageously increase the strength of the panel and / or the thermal characteristics. All or a sub-set of the columns may be filled such that a balance can be achieved between strength, weight and thermal performance.

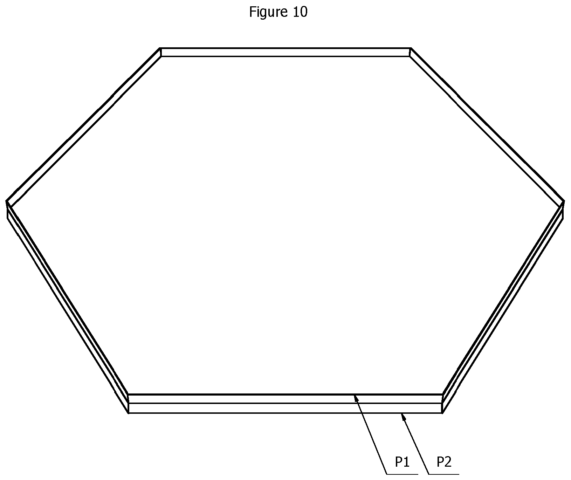

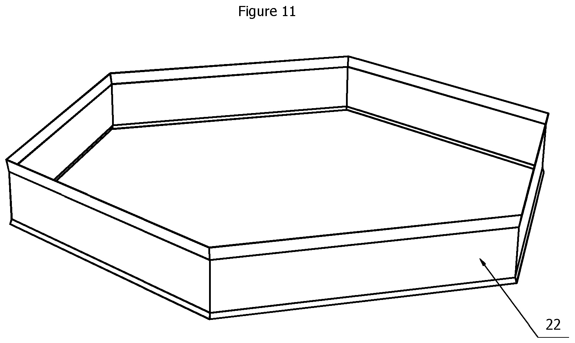

Figures 9 and 10 show the hexagonal panel internal details. Figure 10 also illustrates the two perimeter portions P1 and P2 corresponding to the perimeters described above with reference to figures 5B. Figure 11 illustrates the perimeter 22 of the hexagonal panel.

Each of the columns shown in figure 9 may additionally be provided with a hole, slot or aperture allowing air communication into and out of each column. Thus, air can be drawn from each column through the valve to create a vacuum across the panel and inside of each column. Pressure differentials within the panel can be avoided and the thermal properties of the vacuum maintained.

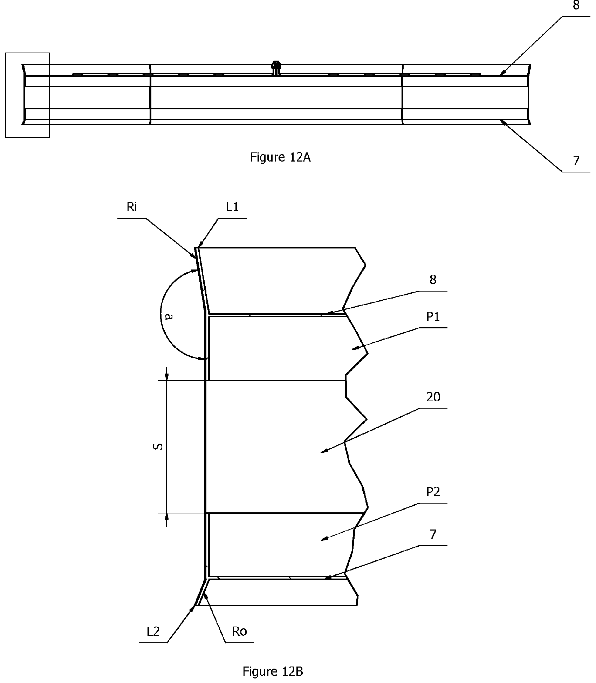

It remains a requirement of the hexagonal panel that the entire perimeter is air-tight (impervious to gas flow) whilst maintaining the thermal insulation properties needed between the inwardly facing surface and outwardly facing surface. This can be achieved with reference to figure 12A.

Figure 12A illustrates one embodiment of a hexagonal panel arrangement.

The panel comprises the inwardly facing surface 7 and outwardly facing surface 8 and additionally two lips or rims Rᵢ and Rₒ

The rims or lips are additionally illustrated in figure 8C where it can be seen that a rim extends from the outwardly facing surface and around the perimeter of the panel. The function of the rim is described below.

The rim is angled with respect to the vertical side surface of the perimeter of the panel as shown by angle a (which is greater than 90 degrees). The panel is constructed of an outwardly facing component P1 and an inwardly facing component P2 as also illustrated in figures 8C and 10. A separation S is provided between the two components forming the opposing surfaces of the hexagonal panel.

To create the seal around the perimeter of the panel a thin layer of stainless-steel 20 is coupled to the outer perimeter of the panel to overlap the separation S and to be coupled to the two components P1 and P2.

The stainless-steel layer may advantageously be bonded to an inner liner of wood or similar material within the perimeter of the panel and itself extending across the separation S. Providing a backing layer allows the stainless-steel layer to be extremely thin and thereby simultaneously provide:
(a) the required air sealing surface around the perimeter of the panel; and
(b) the thermal isolation that is required around the perimeter of each panel.

The stainless-steel may extend across the entire depth of the panel i.e. from L1 to L2 in figure 12B.

Figure 12 B shows a thin stainless-steel layer and the backing surface as described above. The thicknesses of the materials forming the arrangement shown in figure 12A may be selected according to the desired thermal and structural performance of the panel. For example, the dimensions may be within the following ranges:
Outwardly facing layer thickness range - 0.2mm to 1mm
Inwardly facing layer thickness range - 0.2mm to 1mm
Range of separation S - up to 200mm
Thickness of thermal isolation layer - a thickness less than the thickness of the adjacent material, for example 0.8mm with an adjacent material thickness of 1mm.

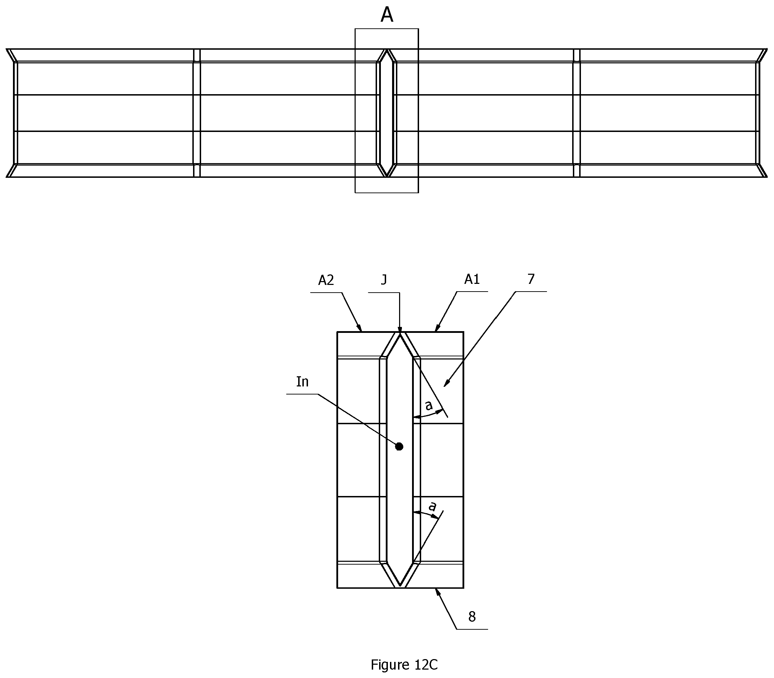

Figure 12C illustrates the function of the outer and inner rims Rₒ and Rᵢ.

As shown, two adjacent insulations arrangements A1 and A2 are brought into abutment to form part of the tessellating arrangement of the insulation system. The two adjacent arrangements A1 and A2 will come into contact along the 6 straight perimeter lines of the hexagon's shape when tessellating the arrangement.

Here, at point J in figure 12C a weld bead can be formed to weld the two arrangements together. The weld itself creates a gas impervious seal preventing any air passing from the cold side of the arrangement to the ambient side. When connecting the arrangement to a tank the welding is arranged on the ambient side of the panel and conversely when the arrangement is arranged on a hull the welding is arranged on the cold side of the panel.

The angle a of the rim allows for some flexibility and movement of the adjacent arrangements A1 and A2. Thermal contraction of the cold side of the panels will tend to pull the two adjacent rims apart. On the ambient side of the panel thermal expansion will tend to bring adjacent rims together.

Advantageously the cold side of the panel or the ambient side of the panel will not be firmly coupled to the tank or hull to allow for thermal movement of the insulation arrangement relative to the tank/hull surface as the tank is emptied (and potentially warmed up) and again filled (and thus cooled down). Advantageously the connection to the tank or the hull is flexible and allows for the relative movement between the tank/hull and the panel.

To fully optimise the thermal properties, the void Iₙ which is formed between adjacent panels may be filled with an insulating material. For example, the void may be filled with polyurethane, a mineral wool, EPS (expanded polystyrene) or other insulating material that can be conveniently located with the void to fill the space. Alternatively, vacuum may be introduced in the void.

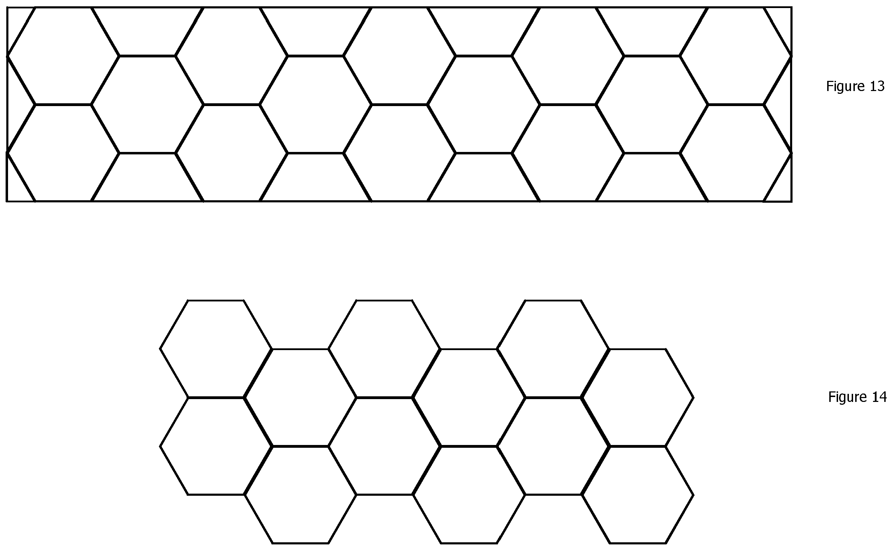

Figures 13 and 14 show a plurality of hexagonal panels coupled together for connection to the inner hull of the vessel or outer surface of the tank. In such an arrangement the impermeable seal around the perimeter is only required around the outermost perimeter of the entire arrangement as opposed to the perimeter of individual panels. Thus, a single internal volume of the arrangement may be provided, and a single evacuation valve used. This allows for faster installation and evacuation of the arrangement.

In situations where adjacent groups or pluralities of panels are brought together on a surface then any void between adjacent groups may be advantageously filled with an insulating material such as an expanded foam or the like as described above. Alternatively, vacuum may be introduced in the void.

Furthermore, it facilitates the convenient checking and monitoring of the vacuum level within the arrangement which is important for the thermal performance of the arrangement. In such an arrangement only a single valve need be checked to determine the internal pressure for a plurality of connected panels. A pressure gauge may additionally or alternatively be installed.

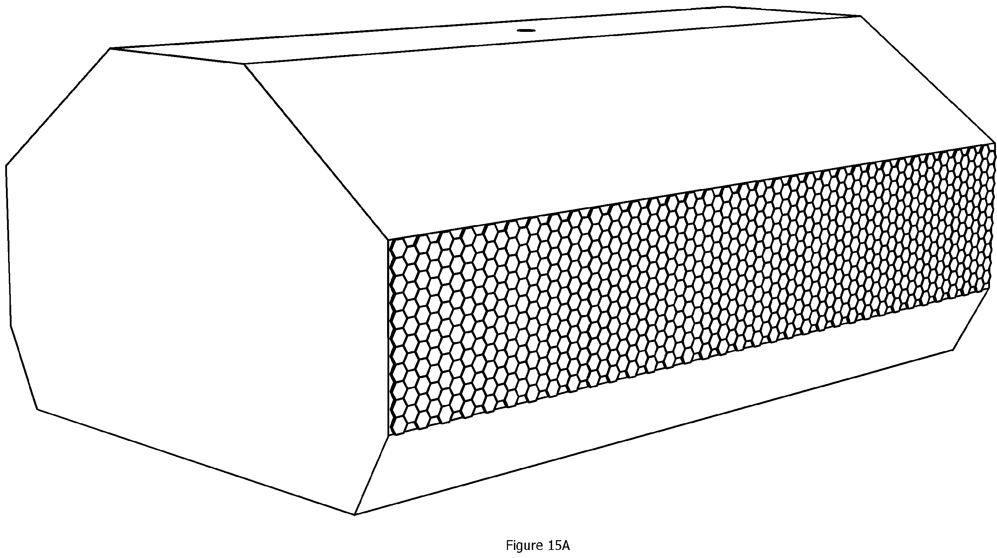

Figure 15A illustrates the installation of the hexagonal arrangement on the outer surface of a tank.

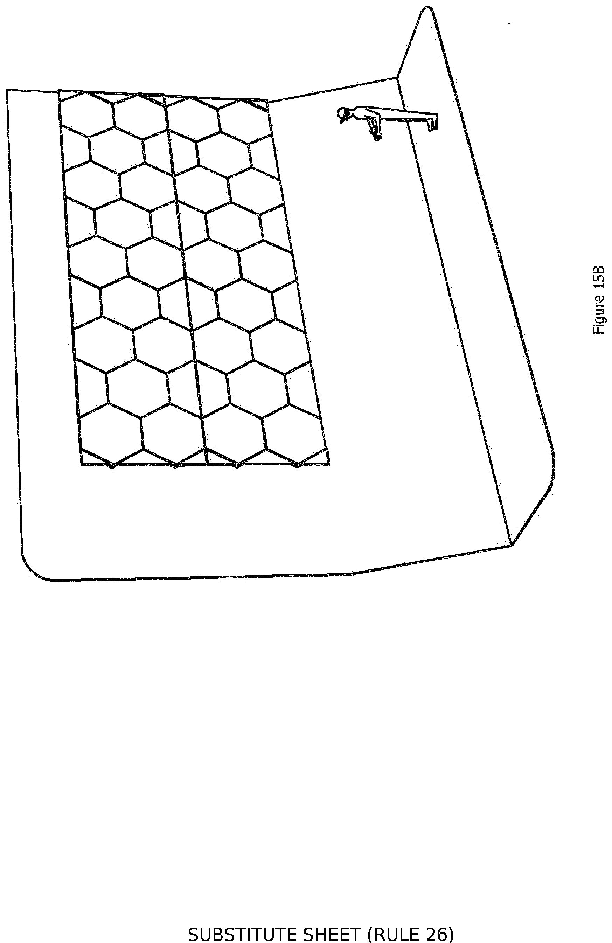

Figure 15B illustrates the installation of the hexagonal arrangement on the inner hull in a room / hold space (cargo area) of a ship.

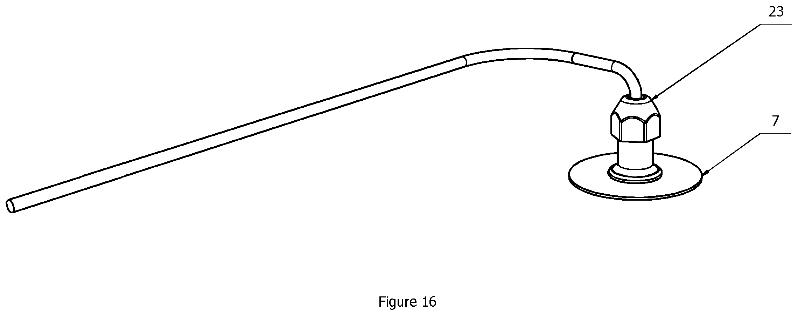

Figure 16 illustrates a vacuum connection connected to a vacuum valve on a panel and an associated conduit through which air can be evacuated. It will be recognised that a plurality of individual panels or banks of panels could be connected to a single vacuum pump to create one or more vacuums. For example, a manifold arrangement may be provided allowing for convenient couplings and maintenance.

Although the example described above relates to a hexagonal panel it will be recognised that the same approach may be used with other shapes which may tessellate. This may, for example, be square or triangular panels. Depending on the geometry of the tank to be insulated, a combination of different shapes may be utilised and tessellated together to provide a complete barrier covering the entire surface of the tank or the inner surface of the vessel's hull. It also follows that the rim and perimeter thermal isolation arrangements many equally be used for different panel shapes.

Monitoring of the insulating arrangement may be achieved using temperature monitoring and/or pressure monitoring.

Each panel or plurality of panels defined by an impermeable seal may be connected to a pressure control and monitoring system and a vacuum pump via the vacuum valve 12. Divergence between defined vacuum pressure, a default value, and an actual pressure will be monitored. A vacuum pump connected to the grid, or bank, of panels will activate and restore default vacuum pressure when and if required.

Alternatively, temperature may be applied as the monitoring parameter instead of pressure or in addition to pressure. Temperature measurement can be achieved using sensors such as thermocouples or passively such as infra-red (IR) cameras to monitor variations in temperature between the panels and relative to the desired operating temperature. If the temperature rises above pre-defined default values, loss of vacuum is indicated. A vacuum pump connected to a panel or the grid of pluralities of panels will be activated and restore default vacuum pressure when and if required.

It will be recognised that the insulation arrangements described herein may be used to allow for the transportation of liquefied gases in cargo applications as described above i.e. where large volume tanks are used on ships specifically constructed to carry liquefied gas. The inventors have established that the insulation panel arrangement may also be used in other related applications. For example, the panels might be mounted on the tank itself or, if the tank is not insulated, on the walls in a room / hold-space where the uninsulated tank is placed.

Additionally, or alternatively, an LNG fuel tank may be realised using an insulating arrangement described herein.

Additionally, or alternatively, a liquid hydrogen (LH₂) fuel tank may be realised using an insulating arrangement described herein. Thus, clean fuel may be used by providing such an insulated fuel tank which could contain liquefied hydrogen.

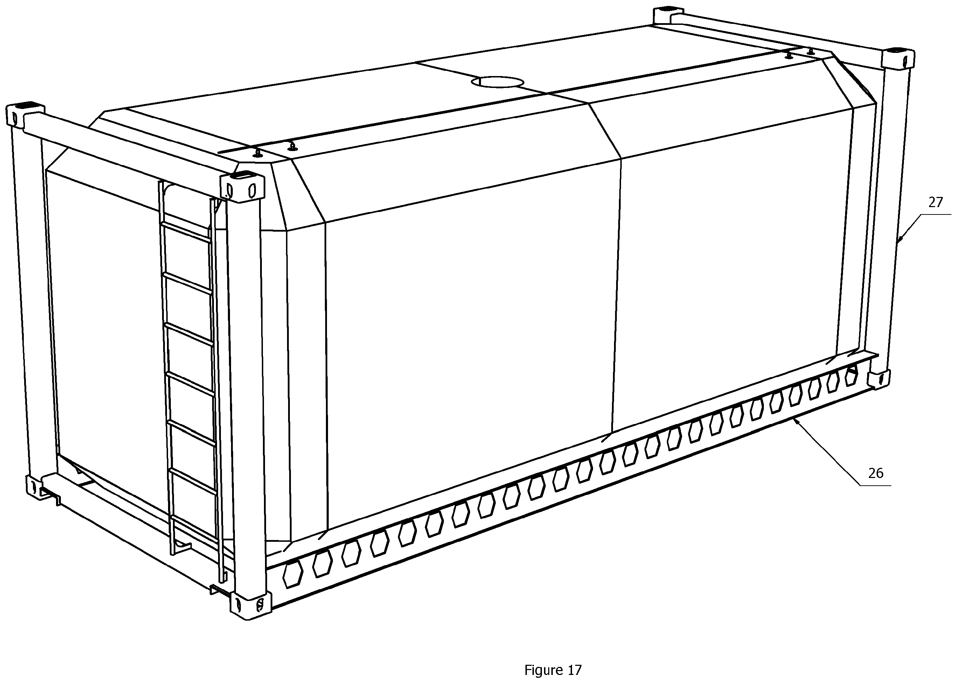

The discussion above focusses on the use of the insulation arrangement in purpose-built cargo ships having a large tank as illustrated in figure 15 or several large tanks, and as well for fuel tanks (for either LNG / LH₂). However, a modular cargo arrangement may also be realised as now described with reference to figures 17 to 20.

Figure 17 shows a liquefied gas transport arrangement 26 incorporating the insulation arrangements described herein. The transport arrangement is arranged to be contained within the dimensions of an ISO standard container, such as but not limited to 20-, 40- or 45-foot-long (6,096-, 12,192- or 13,716-meters-long), including high cube freight container of type used to transport cargo on ships or any other suitable skid-like structure.

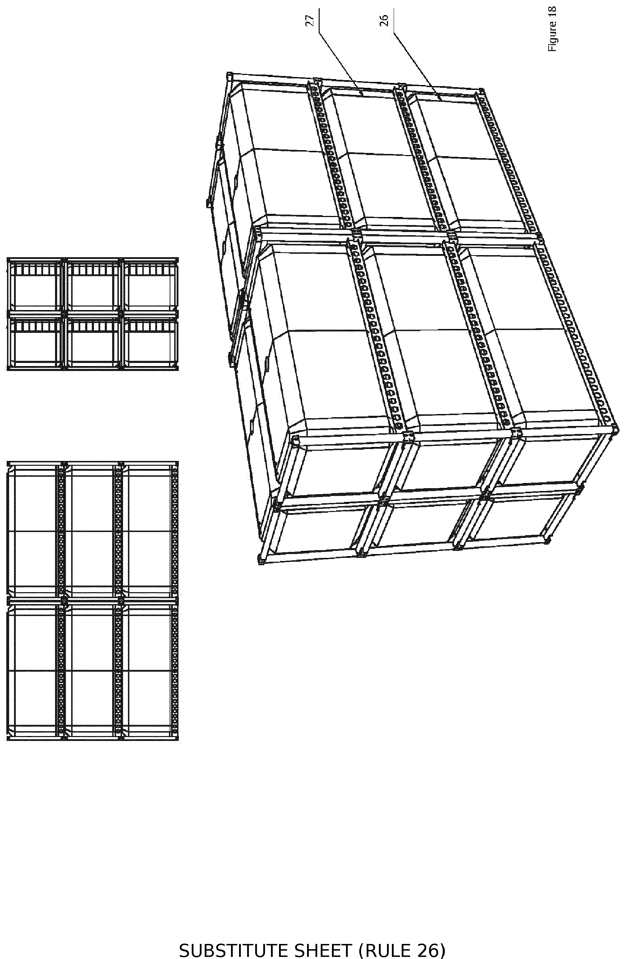

The outer structure 27 is arranged so that separate transport arrangements can be coupled together as shown in figure 18. An array of individual liquefied gas transport arrangements can then be secured together for transport, for example, within or on the deck of a cargo ship. In Figure 18, 12 individual liquefied gas transport arrangements are coupled together to form an array of tanks.

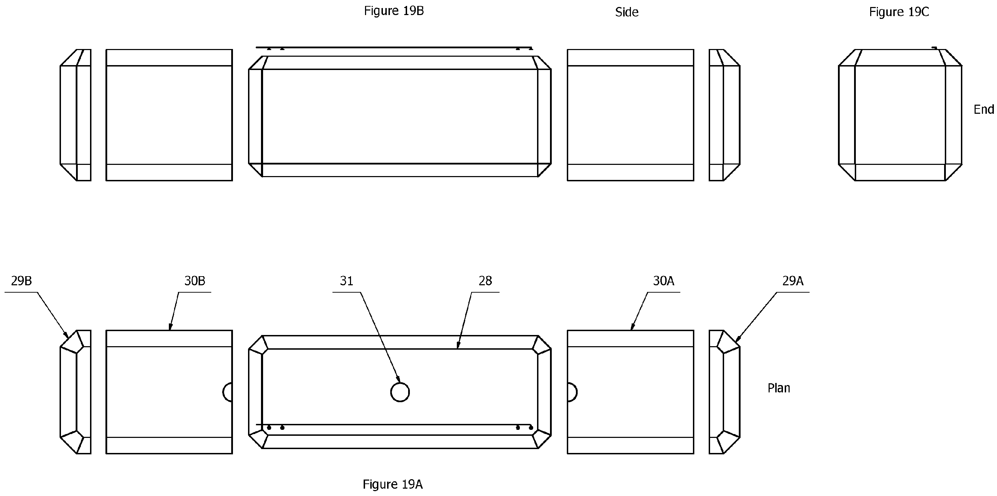

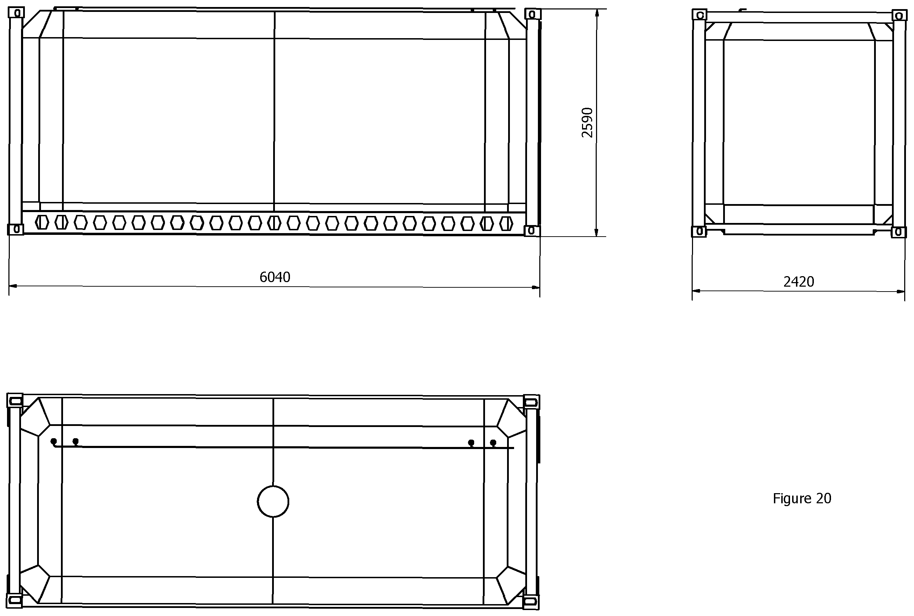

The insulation of the arrangement will now be described with reference to figures 19 and 20.

Figure 19A shows a plan view of the arrangement. Figure 19B shows a side view and figure 19C and end view of the arrangement.

Figure 19A shows an exploded view of the individual sections making up the insulation layer surrounding the tank. The tank 28 is arranged to contain the liquefied gas, such as hydrogen (LH₂) or LNG. The tank 28 is surrounded by an insulation layer which is itself formed of 4 sections. It will be recognised that any number of sections may be used but using 4 sections improves the simplicity of construction.

The tank 28 may be surrounded by 2 end sections 29A, 29B and two sleeve sections 30A, 30B. The sleeve sections 30A, 30B are arranged to slide over the length of the tank. The tank is then 'sealed' by locking the end sections 29A, 29B to form an envelope around the tank 28. Referring to figure 17 the encased tank is shown with an access port 31 for loading, unloading and drawing a vacuum in the insulation layer.

The insulation layer may be in the form of a tessellated arrangement of individual panels as described herein. However, the sleeves of the arrangement shown in figure 19A-19C allow longer section of insulation layers having the same vacuum internal cavity to be used and conveniently manufactured. As described herein the spacing elements may be used to provide the structural support needed to the insulation as the vacuum is drawn within the layer.

The spacing elements may be discrete elements or may be elongate members extending along the length of the sleeves (and within the space defined between tank facing layer and outwardly facing layer). This allows for convenient manufacture such as by extruding.

Figure 20 shows the side, end and plan view of the arrangements with suitable dimensions to confirm to the sizes of containers used on cargo ships and in international transportation. Thus, the arrangement can conveniently work using conventional logistics systems without the need for special equipment or geometries for loading and unloading.

In another arrangement the tank 28 may be cylindrical and the sleeves corresponding cylindrical to surround the cylindrical tank. The end portions would then be two opposing concave insulation 'caps' on either end of the tank.

The arrangements described herein relating to vacuum, temperatures sensing and boil-off handling / management may be conveniently arranged within the outer boundary of the container, for example when a single container is used. Alternatively, multiple containers may be connected to a primary container which houses the controlling and monitoring equipment for vacuum, temperature sensing and boil-off arrangement, for example when multiple containers are used together.

It will also be recognised that each container may be provided with suitable conduits and connectors allowing the vacuum to be drawn from multiple container insulation arrangements from a single vacuum source. Electrical connections may similarly be provided for communicating power and temperature/pressure information between containers. Thus, a fully modular system of containers may be realised.

The invention described herein may, as mentioned, also be used for fuel tank applications for ships.

In any of above configurations, the arrangement may include a boil-off management system limiting the increasing pressure in the tank developing as liquid vaporises into gas, ensuring it stays within safe levels. This may include re-liquefaction for re-injection.

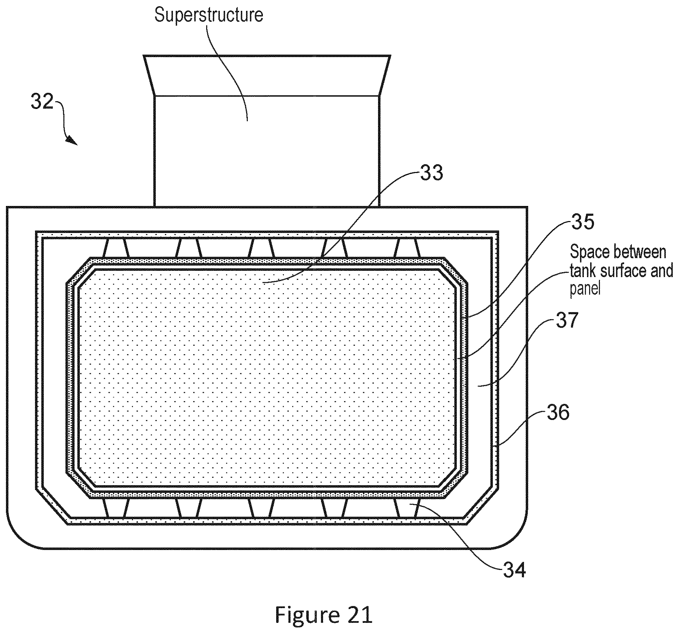

Still further examples of the insulation and transportation according to inventions described herein are set out with reference to figures 21, 22 and 23.

The insulation arrangement described above is formed of a plurality of discrete units which can be closely aligned on either the tank surface and/or on the hull surface as described above.

This is further illustrated with reference to figure 21 which shows a cross-section of a liquefied gas carrying vessel 32 including the superstructure of the vessel above the cargo holding tank(s). Here, the vessel 32 comprises a tank 33 in which the liquefied fuel is loaded and contained during transportation. The tank 33 is supported within the structure of the vessel 32 by a plurality of supports or 'feet' 34. The supports 34 connect the tank to the hull of the ship, provide the structural support for the tank 33 and also provide a thermal break between the cold tank and the lower surface of the hull. This is described further below.

Figure 21 also illustrates the primary insulation layer 35 which is arranged proximate to and coupled to the tank 33 as described above with reference to the panels. A secondary insulation layer 36 is also illustrated which is arranged proximate to and coupled to the hull of the ship.

A void 37 is located between the primary insulation layer 35 and the secondary insulation 36. As described above, this void may form part of the insulation system for the vessel by providing an additional thermal step between the cold liquid in the tank and the relatively warm liquid of the sea. This void 37 may be filled with an inert Nitrogen gas, helium gas or a vacuum may be applied.

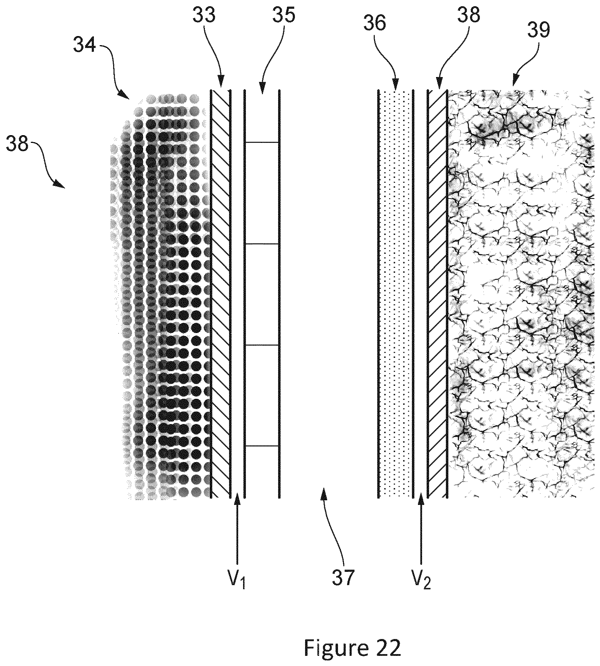

As shown in figure 22, a void V₁ is located between the primary insulation layer 35 and the tank 33 surface. This cavity or void may be filled with a gas which advantageously has a lower condensing temperature than that of the liquid within the tank. A vacuum may also be applied.

Two gaseous candidates are helium (which condenses at a temperature of approximately minus 269 degrees C) and hydrogen gases (which condenses at a temperature of approximately minus 253 degrees C). A third option is to create a vacuum in the void 37. In each of these three scenarios the contents of the cavity are preventing from condensing and turning to ice or slush within the cavity. It will be recognised that with a vacuum no gas is present at all.

A perfect contact between the primary insulation layer and tank and the secondary insulation layer and (inner) hull is unlikely to be achieved and consequently a small separation will occur between respective insulation panels and surfaces creating voids. The void between the tank and the insulation layer will when the tank is carrying a load such as LH₂ hold a temperature marginally higher than that of the load. In cases where this gap is occupied by air containing oxygen and nitrogen, these to components will condensate at -183 and - 196 C respectively creating the formation of ice. All other gases with the exception of hydrogen and helium (which will condensate at -269 C) will also condensate and cause the same issue.

Thus, by applying Helium or Hydrogen in this gap the gas advantageously still remains as gas at this low temperature i.e. it does not condense or create ice. A third alternative is establish vacuum in this void.

The void between the insulation panel and the hull will not be subjected to temperatures as low. This void may be filled with air, nitrogen or helium.

The two voids between tank/insulation and insulation/hull may not be purposely created. Both are a result of the fact that the insulation panels a glue is not used to join the insulation to the surfaces, meaning it will never be a perfect fit and some gap will always be present between the insulation and the surface. On the warm side this does not present a disadvantage. On the cold side - between insulation and tank, this gap is disadvantageous. The temperature in this gap will be a fraction higher than the temperature in the tank itself. If this gap is filled with air the oxygen and nitrogen in the air will condensate at -183 and -196 C respectively and this will create unwanted ice. All other gases will also condense, except Helium (at -269)C and hydrogen. Hydrogen outside the tank (if hydrogen is used) will be at a temperature slightly above the condensation temperature for hydrogen and will thus not condense.

A multi-layered insulation system 38 can thus be created, with the following layers commencing from the tank within the vessel. This is illustrated with reference to figure 22, which is a cross-section through part of the insulation layers shown in figure 21.

The multi-layer insulation system can be broken down into the following layers:

**Table 1**

| | |
|---|---|
| Layer 1 | The Tank Wall 33 itself - this contains the liquid 34 and acts as the liquid barrier and first insulation. |
| Layer 2 | The first substantially thin cavity V₁ between the tank 33 and the primary insulation layer 35. This may be filled with a suitable gas, such as helium, hydrogen, or a vacuum may be drawn within this thin cavity. The couplings connecting the primary insulation layer 35 will extend intermittently across this cavity. |
| | This gap may be intentionally created or may be created by virtue of installation tolerances between the primary insulation and the tank. |
| Layer 3 | The primary insulation layer 35 itself. This may be a plurality of tessellating panels (as described above) or may in some arrangements be a polyurethane layer or the like, for example in panel form or sprayed on to the tank. |
| Layer 4 | The Void 37. This may similarly be filled with a suitable gas such as helium or nitrogen. |
| Layer 5 | The secondary insulation layer 36 itself. This may be a plurality of tessellating panels (as described above) or may in some arrangements be a polyurethane layer or the like, for example in panel form or sprayed on to the tank. |
| Layer 6 | The Void V₂. This may similarly be filled with a suitable gas such as helium or nitrogen. However, because it will not be exposed to extremely low temperatures air may also be used. In an arrangement where a sprayed polyurethane layer is used a void V2 may be avoided. |
| Layer 7 | The hull or inner hull wall which may represent the wall member/ bulkhead separating the hold from the ballast tanks 38. |

**Table 2**

| | **Tank Insulation** | **Hull Insulation** |
|---|---|---|
| **1** | Multiple Panel | Polyurethane |
| **2** | Polyurethane | Multiple Panel |
| **3** | Multiple Panel | Multiple Panel |
| **4** | Polyurethane | Polyurethane |

The inventors have established that the lowest thermal performance is achieved with a polyurethane/polyurethane pairing and that an optimal thermal performance is achieved with a multiple(tessellating) panel/multiple panel (as described with reference to figures 1 to 20). Still further a vacuum arrangement in such panels provides the best thermal performance.

It will thus be recognised with reference to table 1, table 2 and to figure 22, that a complex thermal arrangement may be provided for a vessel according to an invention described herein.

Advantageously the thermal properties of each layer may be optimised for the particular cargo. Furthermore, manufacturing and installation may be simplified and adapted to create the multiple void layers. Lower manufacturing tolerances allow for higher tolerances on tank and hull geometries whilst simultaneously providing the additional void layers.

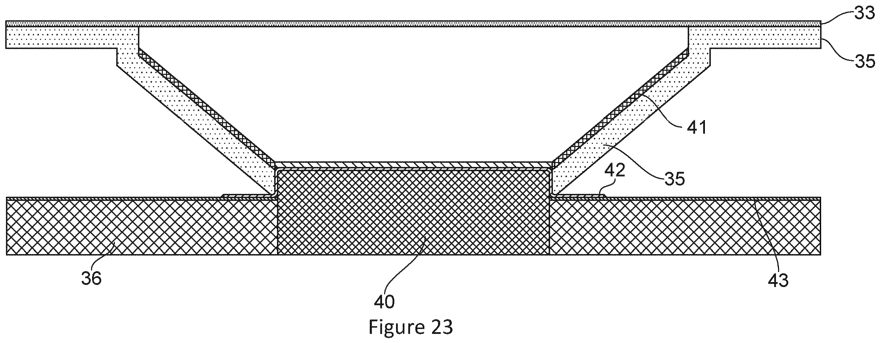

Figure 23 illustrates the supports of 'feet' 34 shown in figure 21.

The supports 34 provide the functions of structural support of the tank, physical location of the tank i.e. to prevent movement and also as a thermal break to prevent heat from the sea around the hull being conducted to the tank. Additionally, to maintain the integrity of the void described above the surrounds to each support or foot must be sealed to prevent gas escape, ingress or loss of vacuum.

This is achieved using a load bearing main member 40. This is located on a lower surface against the hull and on an upper surface against the tank.

As described above, helium may be used in the voids described. Helium liquifies at lower temperature than hydrogen and can be used in the void to prevent formation of ice/ sludge. In such an arrangement an additional supply-system of helium and thus a piping/ valve arrangement to the individual voids may be provided (using a similar arrangement as described above). The perimeter of each void may then be sealed to prevent ingress/egress of the chosen gas, such as helium.

Figure 23 illustrates the coupling between the tank and the lower surface of the hull i.e. the way in which the tanks are both supported and importantly insulated.

Figure 23 shows a single of the plurality of feet 34 show in figure 21. As shown the foot arrangements comprises a thermal break 40 which provides a structural connection between the tank wall 33 and the hull. This may be made of any suitable material including, for example, a wood.

As shown, the primary thermal insulation layer 35 is arranged to follow the side contours of a steel support structure 41 which extends from the thermal break 40 to the tank 33. This contour of layer 35 provide continuity of insulation around the foot structure

To provide a gaseous seal so as to seal the thermal bridge/tank support 40 a metal welded cap or hat 42 is welded to the inner surface of a metal outer layer 43 of the insulation panel or layer 36. The weld surrounds the foot thereby providing a gaseous seal to maintain the integrity of the void 37 which may, as described above, be filled with an inert gas such as nitrogen.

The tank «foot» (trapeze) above the support (40): The trapez shape could be a closed box of steel, and the void inside could be vacuum. The inventors have also established that the panel and insulation arrangements described herein, including the multiple insulation layer and void arrangement may also be applied to a spheroid tank, in effect a football or prolate spheroid shape wherein each planar surface of the spheroid corresponds to a panel described herein. The panels may comprise a variety of numbers of sides, including pentagonal shapes and hexagonal shapes, each welded or coupled together.

Viewed from another aspect there is provided a modular insulation arrangement for a ship comprising one or more tessellating insulation units as described herein arranged against or proximate to a cargo containing tank of the ship and defining a primary insulation layer and a second insulation layer, spaced from said first layer, and defining a space therebetween.

The second layer may also be a plurality of tessellating insulations units or a layer or polyurethane (for example sprayed). In cases were the arrangement is not used for LH2 but e..g LNG, the second insulation layer may not be necessary.

A gap or cavity between the one or more tessellating insulation units and the cargo containing tank and of the ship may be filled with a gas selected from helium or hydrogen. A vacuum may also be applied. This may equally be applied to tessellating panels forming the insulating layer against or proximate to the ship's hull or ballast water tanks (which are often part of the hull).

## Claims

1. A modular insulation arrangement comprising one or more tessellating insulation units, each unit comprising a first inwardly facing layer and a second outwardly facing layer spaced from the first layer, the two layers defining a space therebetween and one or more spacing members extending between the first and second layers, and wherein the surfaces defining the first layer, the second layer and the outer perimeter extending around the arrangement are air impermeable surfaces, wherein the spacing member(s) is/are in the form of a plurality of columns extending between the first and second layers, wherein each column comprises an aperture allowing air to enter and leave the volume within the column, wherein the perimeter of the or each tessellating unit comprises a connection surface for abutment with an adjacent tessellating unit, wherein the connection surface provides a continuous contact between adjacent units along the surface when adjacent units are brought together, wherein the connection surface is in the form of a radially extending rim extending from the perimeter of the unit, and wherein the air impermeable surface defining the outer perimeter of the arrangement is formed of a first portion coupled to the first layer and a second portion coupled to the second layer and further comprising a third portion coupled to the first and second portions.

2. An arrangement as claimed in claim 1, wherein the space between the first and second layers and the surface defining the outer perimeter of the arrangement defines an internal volume to the arrangement and wherein the spacing members are arranged in use to resist atmospheric pressure acting on the surfaces when the internal volume is evacuated of air.

3. An arrangement as claimed in claim 2, wherein the arrangement comprises a valve in fluid communication with the internal volume, the valve arranged in use to allow air to be evacuated from the internal volume.

4. An arrangement as claimed in claim 1, wherein the third portion has a lower thermal conductivity coefficient than the first and or second portions.

5. An arrangement as claimed in any preceding claim wherein the spacing member(s) is/are formed all or in part from a material selected from wood, plywood, wood composites, bamboo, cardboard, polyurethane, PEEK, PTFEE or stainless-steel.

6. An arrangement as claimed in any preceding claim wherein the spacing member(s) is/are formed of a first portion extending from the first surface and a second portion extending from the second surface and an intermediate portion connecting the first portion to the second portion of the spacing member, optionally wherein: the intermediate portion has a lower thermal conductivity coefficient than the first and or second portions, and optionally: wherein the first portion and second portion of the spacing element are formed of aluminium or an alloy thereof and wherein the intermediate portion is formed from a material selected from the list of aluminium, aluminium alloy, stainless-steel, rubber, POM, PTFE or PEEK.

7. An arrangement as claimed in claim 1, wherein each unit comprises a first radially extending rim on the inwardly facing surface of the unit and a second radially extending rim on the outwardly facing surface of the unit.

8. An arrangement as claimed in any preceding claim, wherein the tessellating insulation units have a shape selected from triangle, square, rectangular, hexagonal or tessellating polygon.

9. An arrangement as claimed in any preceding claim wherein the tessellating insulation units are hexagonal, and the one or more spacing elements are hexagonal in cross-section, and optionally wherein the spacing element is in the form of a single matrix of hexagonal columns.

10. An insulation system comprising a plurality of modular insulation arrangements as claimed in any preceding claim and wherein multiple modular insulating arrangements are in gaseous communication with one another such that evacuation of one arrangement causes air to be drawn from other arrangements, optionally wherein adjacent modular insulation arrangements are welded together along a perimeter of each arrangement, optionally further comprising one or more air pumps in gaseous communication with one or more insulation arrangements and arranged in use to draw air from the or each arrangement, and optionally further comprising
A a pressure detector arranged in use to monitor the pressure within the or each arrangement and further comprising a control arrangement arranged to activate an air pump in response to the detected pressure;
And/Or
B a temperature sensor arranged in use to monitor the temperature within the or each arrangement and further comprising a control arrangement arranged to activate an air pump in response to the detected temperature.

11. A cryogenic containment tank comprising an outer insulation layer formed of a modular insulation arrangement as claimed in any of claims 1 to 9 or insulation system as claimed in claim 10.

12. An ocean-going ship comprising a cryogenic containment tank as claimed in claim 11.

13. A method of insulating a cryogenic containment tank comprising a modular arrangement as claimed in any of claims 1 to 9, the method comprising the step of evacuating the space within one or more modular arrangements, and optionally: wherein the vacuum is intermittently measured, and further evacuation carried out to maintain the vacuum.

14. A liquefied gas transport arrangement comprising a tank for containing a liquefied gas and an insulation layer surrounding the outer surface of the tank, wherein the insulation layer comprises the modular insulation arrangement according to any one of claims 1 to 9, optionally wherein the insulation layer surrounding the tank is divided into separate insulating sections and wherein the separate insulating sections are arranged in use to abut one another to envelope the tank, and optionally: wherein the modular insulation arrangement comprises a support structure configured to contain the one or more tessellating insulation units and wherein the support structure is arranged in use to be coupled to adjacent and corresponding support structures to form an array of individual liquefied transport arrangements.

15. A shipping insulation system comprising one or more tessellating insulation units as claimed in any of claims 1 to 9, arranged against or proximate to a cargo containing tank of the ship and defining a primary insulation layer the system comprising a second insulation layer, spaced from said first layer, and defining a space therebetween, optionally wherein the second layer is also a plurality of tessellating insulations units or a layer or polyurethane, and optionally wherein a gap or cavity between the one or more tessellating insulation units and the cargo containing tank of the ship is filled with a gas selected from helium or hydrogen or is a vacuum.

## Patentansprüche

1. Modulare Isolationsanordnung, die eine oder mehrere tessellierende Isolationseinheiten umfasst, wobei jede Einheit eine erste nach innen weisende Schicht und eine zweite nach außen weisende Schicht umfasst, die von der ersten Schicht beabstandet ist, wobei die zwei Schichten einen Raum dazwischen definieren und sich ein oder mehrere Abstandselemente zwischen der ersten und der zweiten Schicht erstrecken, und wobei die Oberflächen, die die erste Schicht, die zweite Schicht und den Außenumfang definieren, der sich um die Anordnung herum erstreckt, luftundurchlässige Oberflächen sind, wobei das Abstandselement bzw. die Abstandselemente in Form mehrerer Säulen vorliegt bzw. vorliegen, die sich zwischen der ersten und der zweiten Schicht erstrecken, wobei jede Säule eine Öffnung umfasst, die Luft ermöglicht, in das Volumen innerhalb der Säule einzutreten und es zu verlassen, wobei der Umfang der oder jeder tessellierenden Einheit eine Verbindungsfläche zum Anstoßen an eine benachbarte tessellierende Einheit umfasst, wobei die Verbindungsfläche einen kontinuierlichen Kontakt zwischen benachbarten Einheiten entlang der Oberfläche bereitstellt, wenn benachbarte Einheiten zusammengebracht werden, wobei die Verbindungsfläche die Form eines sich radial erstreckenden Randes aufweist, der sich vom Umfang der Einheit erstreckt, und wobei die luftundurchlässige Oberfläche, die den Außenumfang der Anordnung definiert, aus einem ersten Abschnitt, der mit der ersten Schicht gekoppelt ist, und einem zweiten Abschnitt, der mit der zweiten Schicht gekoppelt ist, gebildet ist und ferner einen dritten Abschnitt umfasst, der mit dem ersten und dem zweiten Abschnitt gekoppelt ist.

2. Anordnung nach Anspruch 1, wobei der Raum zwischen der ersten und der zweiten Schicht und der Oberfläche, die den Außenumfang der Anordnung definiert, ein Innenvolumen der Anordnung definiert und wobei die Abstandselemente im Gebrauch angeordnet sind, um Atmosphärendruck, der auf die Oberflächen wirkt, zu widerstehen, wenn das Innenvolumen von Luft evakuiert ist.

3. Anordnung nach Anspruch 2, wobei die Anordnung ein Ventil in Fluidverbindung mit dem Innenvolumen umfasst, wobei das Ventil im Gebrauch angeordnet ist, um zu ermöglichen, dass Luft aus dem Innenvolumen evakuiert wird.

4. Anordnung nach Anspruch 1, wobei der dritte Abschnitt einen niedrigeren Wärmeleitfähigkeitskoeffizienten als der erste und der zweite Abschnitt aufweist.

5. Anordnung nach einem der vorhergehenden Ansprüche, wobei das Abstandselement bzw. die Abstandselemente ganz oder teilweise aus einem Material gebildet ist bzw. sind, das aus Holz, Sperrholz, Holzverbundwerkstoffen, Bambus, Karton, Polyurethan, PEEK, PTFEE oder Edelstahl ausgewählt ist.

6. Anordnung nach einem der vorhergehenden Ansprüche, wobei das Abstandselement bzw. die Abstandselemente aus einem ersten Abschnitt, der sich von der ersten Oberfläche erstreckt, und einem zweiten Abschnitt, der sich von der zweiten Oberfläche erstreckt, und einem Zwischenabschnitt, der den ersten Abschnitt mit dem zweiten Abschnitt des Abstandselements verbindet, gebildet ist bzw. sind, wobei optional: der Zwischenabschnitt einen niedrigeren Wärmeleitfähigkeitskoeffizienten als der erste und der zweite Abschnitt aufweist, und optional: wobei der erste Abschnitt und der zweite Abschnitt des Abstandselements aus Aluminium oder einer Legierung davon gebildet sind und wobei der Zwischenabschnitt aus einem Material gebildet ist, das aus der Liste von Aluminium, Aluminiumlegierung, Edelstahl, Gummi, POM, PTFE oder PEEK ausgewählt ist.

7. Anordnung nach Anspruch 1, wobei jede Einheit einen ersten sich radial erstreckenden Rand auf der nach innen weisenden Oberfläche der Einheit und einen zweiten sich radial erstreckenden Rand auf der nach außen weisenden Oberfläche der Einheit umfasst.

8. Anordnung nach einem der vorhergehenden Ansprüche, wobei die tessellierenden Isolationseinheiten eine Form aufweisen, die aus Dreieck, Quadrat, Rechteck, Sechseck oder tessellierendem Polygon ausgewählt ist.

9. Anordnung nach einem der vorhergehenden Ansprüche, wobei die tessellierenden Isolationseinheiten sechseckig sind und das eine oder die mehreren Abstandselemente einen sechseckigen Querschnitt aufweisen, und wobei das Abstandselement optional die Form einer einzigen Matrix von sechseckigen Säulen aufweist.

10. Isolationssystem, das mehrere modulare Isolationsanordnungen nach einem der vorhergehenden Ansprüche umfasst und wobei mehrere modulare Isolationsanordnungen in Gasverbindung miteinander stehen, so dass ein Evakuieren einer Anordnung bewirkt, dass Luft aus anderen Anordnungen angesaugt wird, wobei optional benachbarte modulare Isolationsanordnungen entlang eines Umfangs jeder Anordnung miteinander verschweißt sind, optional ferner umfassend eine oder mehrere Luftpumpen in Gasverbindung mit einer oder mehreren Isolationsanordnungen, die im Gebrauch angeordnet sind, um Luft aus der oder jeder Anordnung zu saugen, und optional ferner umfassend
A einen Druckdetektor, der im Gebrauch angeordnet ist, um den Druck innerhalb der oder jeder Anordnung zu überwachen, und ferner umfassend eine Steueranordnung, die angeordnet ist, um eine Luftpumpe als Reaktion auf den detektierten Druck zu aktivieren;
und/oder
B einen Temperatursensor, der im Gebrauch angeordnet ist, um die Temperatur innerhalb der oder jeder Anordnung zu überwachen, und ferner umfassend eine Steueranordnung, die angeordnet ist, um eine Luftpumpe als Reaktion auf die erfasste Temperatur zu aktivieren.

11. Tieftemperaturhüllkugeltank mit einer äußeren Isolationsschicht, die aus einer modularen Isolationsanordnung nach einem der Ansprüche 1 bis 9 oder einem Isolationssystem nach Anspruch 10 gebildet ist.

12. Hochseeschiff mit einem Tieftemperaturhüllkugeltank nach Anspruch 11.

13. Verfahren zum Isolieren eines Tieftemperaturhüllkugeltanks, der eine modulare Anordnung nach einem der Ansprüche 1 bis 9 umfasst, wobei das Verfahren den Schritt des Evakuierens des Raums innerhalb einer oder mehrerer modularer Anordnungen umfasst, und optional: wobei das Vakuum intermittierend gemessen wird und ein weiteres Evakuieren durchgeführt wird, um das Vakuum aufrechtzuerhalten.

14. Flüssiggas-Transportanordnung, die einen Tank zum Aufnehmen eines verflüssigten Gases und eine Isolationsschicht, die die Außenfläche des Tanks umgibt, umfasst, wobei die Isolationsschicht die modulare Isolationsanordnung nach einem der Ansprüche 1 bis 9 umfasst, wobei optional die Isolationsschicht, die den Tank umgibt, in separate Isolationsabschnitte unterteilt ist und wobei die separaten Isolationsabschnitte im Gebrauch so angeordnet sind, dass sie aneinander anliegen, um den Tank zu umhüllen, und optional: wobei die modulare Isolationsanordnung eine Stützstruktur umfasst, die eingerichtet ist, um die eine oder die mehreren tessellierenden Isolationseinheiten zu enthalten, und wobei die Stützstruktur im Gebrauch dazu angeordnet ist, mit benachbarten und entsprechenden Stützstrukturen gekoppelt zu sein, um ein Array von einzelnen Flüssiggas-Transportanordnungen zu bilden.

15. Isolationssystem für Schiffe, das eine oder mehrere tessellierende Isolationseinheiten nach einem der Ansprüche 1 bis 9 umfasst, die gegen einen Fracht enthaltenden Tank des Schiffs oder in seiner Nähe angeordnet sind und eine primäre Isolationsschicht definieren, wobei das System eine zweite Isolationsschicht umfasst, die von der ersten Schicht beabstandet ist und einen Raum dazwischen definiert, wobei optional die zweite Schicht auch mehrere tessellierende Isolationseinheiten oder eine Schicht oder Polyurethan ist, und wobei optional ein Spalt oder Hohlraum zwischen der einen oder den mehreren tessellierenden Isolationseinheiten und dem Fracht enthaltenden Tank des Schiffs mit einem Gas gefüllt ist, das aus Helium oder Wasserstoff ausgewählt ist oder ein Vakuum ist.

## Revendications

1. Agencement d'isolation modulaire comprenant une ou plusieurs unités d'isolation en mosaïque, chaque unité comprenant une première couche tournée vers l'intérieur et une deuxième couche tournée vers l'extérieur espacée de la première couche, les deux couches définissant entre elles un espace et un ou plusieurs éléments d'espacement s'étendant entre la première et la deuxième couche, et dans lequel les surfaces définissant la première couche, la deuxième couche et le périmètre extérieur s'étendant autour de l'agencement sont des surfaces imperméables à l'air, dans lequel le(s) élément(s) d'espacement se présente(nt) sous la forme d'une pluralité de colonnes s'étendant entre la première et la deuxième couche, dans lequel chaque colonne comprend une ouverture permettant à l'air d'entrer et de sortir du volume à l'intérieur de la colonne, dans lequel le périmètre de l'unité ou de chaque unité en mosaïque comprend une surface de raccordement destinée à venir en butée contre une unité en mosaïque adjacente, dans lequel la surface de raccordement assure un contact continu entre unités adjacentes le long de la surface lorsque des unités adjacentes sont assemblées, dans lequel la surface de raccordement se présente sous la forme d'un rebord à extension radiale s'étendant depuis le périmètre de l'unité, et dans lequel la surface imperméable à l'air définissant le périmètre extérieur de l'agencement est constituée d'une première partie couplée à la première couche et d'une deuxième partie couplée à la deuxième couche et comprend en outre une troisième partie couplée à la première et à la deuxième partie.

2. Agencement selon la revendication 1, dans lequel l'espace entre la première et la deuxième couche et la surface définissant le périmètre extérieur de l'agencement définissent un volume interne à l'agencement et dans lequel les éléments d'espacement sont conçus à l'usage pour résister à la pression atmosphérique agissant sur les surfaces lorsque l'air est évacué du volume interne.

3. Agencement selon la revendication 2, l'agencement comprenant une vanne en communication fluidique avec le volume interne, la vanne étant conçue à l'usage pour pouvoir évacuer l'air du volume interne.

4. Agencement selon la revendication 1, dans lequel la troisième partie possède un coefficient de conductivité thermique inférieur à celui de la première et/ou la deuxième partie.

5. Agencement selon une quelconque revendication précédente dans lequel le(s) élément(s) d'espacement est/sont formé(s) en totalité ou en partie à partir d'un matériau choisi parmi le bois, le contreplaqué, les composites de bois, le bambou, le carton, le polyuréthane, la PEEK, le PTFEE et l'acier inoxydable.

6. Agencement selon une quelconque revendication précédente dans lequel le(s) élément(s) d'espacement est/sont constitué(s) d'une première partie s'étendant depuis la première surface et d'une deuxième partie s'étendant depuis la deuxième surface, et d'une partie intermédiaire reliant la première partie à la deuxième partie de l'élément d'espacement, éventuellement dans lequel : la partie intermédiaire possède un coefficient de conductivité thermique inférieur à celui de la première et/ou la deuxième partie, et éventuellement : dans lequel la première partie et la deuxième partie de l'élément d'espacement sont constituées d'aluminium ou d'un alliage de celui-ci et dans lequel la partie intermédiaire est constituée d'un matériau choisi dans la liste constituée par l'aluminium, un alliage d'aluminium, l'acier inoxydable, le caoutchouc, le POM, le PTFE et la PEEK.

7. Agencement selon la revendication 1, dans lequel chaque unité comprend un premier rebord s'étendant radialement sur la surface tournée vers l'intérieur de l'unité et un deuxième rebord s'étendant radialement sur la surface tournée vers l'extérieur de l'unité.

8. Agencement selon une quelconque revendication précédente, dans lequel les unités d'isolation en mosaïque ont une forme choisie parmi un triangle, un carré, un rectangle, un hexagone et un polygone en mosaïque.

9. Agencement selon une quelconque revendication précédente dans lequel les unités d'isolation en mosaïque sont hexagonales, et le ou les éléments d'espacement ont une section transversale hexagonale, et éventuellement dans lequel l'élément d'espacement se présente sous la forme d'une seule matrice de colonnes hexagonales.

10. Système d'isolation comprenant une pluralité d'agencements d'isolation modulaires selon une quelconque revendication précédente et dans lequel de multiples agencements d'isolation modulaires sont en communication gazeuse les uns avec les autres, de sorte que l'évacuation d'un agencement provoque l'aspiration de l'air des autres agencements, éventuellement dans lequel les agencements d'isolation modulaires adjacents sont soudés ensemble le long d'un périmètre de chaque agencement, comprenant en outre éventuellement une ou plusieurs pompes à air en communication gazeuse avec un ou plusieurs agencements d'isolation et conçues à l'usage pour aspirer l'air du ou de chaque agencement, et comprenant en outre éventuellement
A un détecteur de pression conçu à l'usage pour surveiller la pression à l'intérieur du ou de chaque agencement et comprenant en outre un agencement de commande conçu pour activer une pompe à air en réponse à la pression détectée ;
et/ou
B un capteur de température conçu à l'usage pour surveiller la température à l'intérieur du ou de chaque agencement et comprenant en outre un agencement de commande conçu pour activer une pompe à air en réponse à la température détectée.

11. Cuve de confinement cryogénique comprenant une couche d'isolation extérieure constituée d'un agencement d'isolation modulaire selon l'une quelconque des revendications 1 à 9 ou d'un système d'isolation selon la revendication 10.

12. Navire de haute mer comportant une cuve de confinement cryogénique selon la revendication 11.

13. Procédé d'isolation d'une cuve de confinement cryogénique comprenant un agencement modulaire selon l'une quelconque des revendications 1 à 9, le procédé comprenant l'étape d'évacuation de l'espace à l'intérieur d'un ou plusieurs agencements modulaires, et éventuellement : dans lequel le vide est mesuré par intermittence, et une autre évacuation réalisée pour maintenir le vide.

14. Agencement de transport de gaz liquéfié comprenant une cuve destinée à contenir un gaz liquéfié et une couche d'isolation entourant la surface extérieure de la cuve, dans lequel la couche d'isolation comprend l'agencement d'isolation modulaire selon l'une quelconque des revendications 1 à 9, éventuellement dans lequel la couche d'isolation entourant la cuve est divisée en sections isolantes distinctes et dans lequel les sections isolantes distinctes sont conçues à l'usage pour venir en butée les unes contre les autres afin d'envelopper la cuve, et éventuellement : dans lequel l'agencement d'isolation modulaire comprend une structure de support conçue pour contenir la ou les unités d'isolation en mosaïque et dans lequel la structure de support est conçue à l'usage pour être couplée à des structures de support adjacentes et correspondantes afin de former un réseau d'agencements individuels de transport liquéfié.

15. Système d'isolation de transport comprenant une ou plusieurs unités d'isolation en mosaïque selon l'une quelconque des revendications 1 à 9 disposées contre ou à proximité d'une cuve contenant la cargaison du navire et définissant une couche d'isolation principale, le système comprenant une deuxième couche d'isolation espacée de ladite première couche et définissant un espace entre elles, éventuellement dans lequel la deuxième couche consiste également en une pluralité d'unités d'isolation en mosaïque ou une couche ou du polyuréthane, et éventuellement dans lequel un interstice ou une cavité entre la ou les unités d'isolation en mosaïque et la cuve contenant la cargaison du navire est rempli d'un gaz choisi parmi l'hélium et l'hydrogène ou est sous vide.
